Europäisches Patentamt

European Patent Office

Office européen des brevets

(11) Publication number: **0 058 793**
**A2**

(12) # EUROPEAN PATENT APPLICATION

(21) Application number: 81304793.3

(22) Date of filing: 14.10.81

(51) Int. Cl.³: **B 21 D 24/16**
**// B23D31/00**

(30) Priority: 25.02.81 US 238004

(43) Date of publication of application: 01.09.82
Bulletin 82/35

(84) Designated Contracting States: **DE FR GB IT**

(71) Applicant: **The Minster Machine Company, 564 W. Fifth Street, Minster Ohio 45865 (US)**

(72) Inventor: **Schockman, Robert L., 252 Oak Street, St. Henry Ohio 45883 (US)**
Inventor: **Daniel, Edward A., R.R. 2, Minster Ohio 45865 (US)**
Inventor: **Lesher, Clarence E., Rt. 1, New Bremen Ohio 45869 (US)**

(74) Representative: **Bayliss, Geoffrey Cyril et al, BOULT, WADE & TENNANT 27 Furnival Street, London EC4A 1PQ (GB)**

(54) Scrap cutter for use with mechanical press.

(57) The disclosure relates to a scrap cutter for chopping up the skeleton of strip stock material as it is fed out of a mechanical press (12). The scrap cutter (10) is designed to be a free-standing unit positioned at the outfeed side of the press and actuated by a hydraulic cylinder (30) that is connected through a flexible hose (40) to a second hydraulic cylinder (38) actuated by a power takeoff from the press, such as a cam (56) or small pitman connected to the crankshaft extension (54) of the press. The flexible hydraulic connection between the press and scrap cutter enables the position of the scrap cutter relative to the press to be easily adjusted and eliminates the large and unwieldy mechanical interconnections between the press crankshaft and scrap cutter blade actuating mechanism. A pressure relief valve (178) connected in the hydraulic circuit provides overload protection by relieving the hydraulic pressure when it exceeds a predetermined level, as would occur if multiple thicknesses of stock become jammed between the blades, (24), (26) or other overload producing conditions occur.

## SCRAP CUTTER FOR USE WITH MECHANICAL PRESS

The present invention relates to a scrap cutter particularly adapted for use with a mechanical press, and in particular to a scrap cutter which is actuated indirectly by a power takeoff on the press.

In presses, particularly those which are used for blanking parts out of strip material fed into the press from a supply coil, the stock is fed directly through the press with the skeleton left after the parts have been blanked out emerging from the outfeed side of the press as a strip of scrap. In order to conveniently handle and store the skeleton, it is customary to chop it into short lengths, which then fall into a storage bin for subsequent recycling.

One type of prior art scrap cutter is mounted directly to the press and is driven directly off the crankshaft extension, by means of a mechanical linkage, such as a pitman or lever arm arrangement. On some presses, there is only a single crankshaft extension, which is generally used as the power takeoff for driving the scrap cutter, due to the fact that they have a clutch mounted on the crankshaft. If the crankshaft extension is on the infeed side of the press, a crosshaft mechanism is necessary to transmit the mechanical movement from the infeed side of the press to the outfeed side thereof, which is where the scrap cutter is located. Such crosshaft mechanisms are unwieldy and present some difficulties in mounting them to the press.

In the case of direct mechanical linkage between the scrap cutter and press, lateral repositioning of the scrap cutter relative to the press is quite difficult and is limited to very small adjustments. In order to minimize the tonnage which is required to cut the scrap, it is desirable to cut it at those points where there is minimum material left after blanking of the part. With prior art mechanically linked scrap cutters, the small degree of lateral adjustment which is available often prevents cutting the scrap at the points of minimum material, thereby leading to more rapid wear of the blades.

A further drawback to mechanically linked scrap cutters is that, unless they are provided with hydraulic overload protectors, folding over of the stock so that multiple thicknesses are presented to the blades causes an overload condition to exist. This overload is transmitted directly through the mechanical linkage to the press crankshaft, and substantial damage to the press can result.

A second type of prior art scrap cutter is one wherein the blades are driven by an electric motor. In this case, the scrap cutter is not synchronized with the press and a large loop of skeleton is developed between the press and the cutter so that the cutter will not pull or otherwise interfere with the length of stock which is in the press. Since scrap cutters of this type are relatively low tonnage, they are suitable for only very thin or narrow stock.

Hydraulic scrap cutters have also been used, which are, in essence, hydraulic presses with their own hydraulic supply and pump and means for synchronizing the blades with the action of the press. Although cutters of this type are capable of very high tonnage, they are quite costly and maintenance is a problem because of the necessity for maintaining a separate pumping unit, valving, and the like.

In the past, mechanically linked scrap cutters have been provided with hydraulic overloads wherein a hydraulic cylinder is connected within the mechanical linkage and provided with a relief or dump valve which quickly relieves the pressure if overload conditions should result.

The scrap cutter according to the present invention overcomes the problems and disadvantages of prior art scrap cutters by providing a hydraulic connection between the power takeoff on the press and the reciprocating blades of the cutter. A hydraulic cylinder is mounted to the press and the piston thereof is driven by a suitable mechanical linkage with the press, such as a cam or small pitman. The hydraulic pressure developed within the hydraulic cylinder is transmitted by means of a flexible hydraulic hose to a second hydraulic cylinder mounted on the scrap cutter itself, and the piston for the second hydraulic cylinder is directly connected to the movable blade of the scrap cutter. In the case of a cam drive, which may be connected directly to the crankshaft extension of the press or another suitable rotating element, the rotary movement of the cam is converted to reciprocating movement by means of a cam follower that is connected directly to the piston of the first-mentioned hydraulic cylinder. As the piston pressurizes the hydraulic fluid within the cylinder, this pressure is transmitted to the second cylinder through a hydraulic hose thereby causing the piston in the second cylinder to undergo similar movement, which causes the blades to come together and shear the skeleton.

The fact that the scrap cutter is linked hydraulically with the press enables the scrap cutter to be freestanding, and lateral adjustment thereof over quite large distances is possible. This enables the scrap cutter to be positioned so that the skeleton is cut at the point of minimum material, which reduces the tonnage requirements. A further advantage to the hydraulic linkage between the scrap cutter and press is that the necessity for a large crossshaft is eliminated because the cam and first hydraulic cylinder can be mounted to the infeed side of the press and connected to the scrap cutter located on the outfeed side thereof by a simple hydraulic hose, which presents little in the way of installation and maintenance problems.

Adjustment of the time during the cycle of the press when the scrap cutter is to be actuated can easily be achieved by altering the position of the keyway in the cam or by employing a cam which is frictionally locked to the crankshaft extension and can be loosened and rotated to any desired position thereon. Additionally, if it is desired to cut the scrap less frequently than once for each cycle of the press, all that is necessary is to drive the cam by means of a chain or gear arrangement having a two-to-one ratio, or any other ratio which is desired.

Although the preferred embodiment disclosed hereinafter utilizes a cam as the power takeoff element of the press and hydraulic cylinders mounted on the press and scrap cutter respectively, other arrangements are not precluded. For example, certain types of bellows or other expansible chamber devices could be utilized as long as there is a positive hydraulic displacement between the expansible chamber device on the press and on the cutter mechanism, and sufficient pressure can be developed.

Specifically, the present invention relates to a scrap cutter for use with a press having an element that moves in synchronism with the cycling of the press, such as the crankshaft extension. The scrap cutter comprises a fluid pressure generating device having a first expansible chamber and an operator means for expanding and contracting the chamber when moved in certain directions, the operator means adapted to be mounted to a press such that it is moved in said certain directions by the aforementioned element of the press. The cutter includes a pair of blade elements adapted to cut scrap material when closed wherein at least one of the blade elements is movable relative to the other, and the movable blade element is connected to a fluid pressure actuating device having a second expansible chamber and a connecting arm connected between the second expansible chamber and the movable blade element, the connecting arm being connected such that it closes the movable blade element when the second expansible chamber is expanded and opens the movable blade element when the second expansible chamber is contracted. A fluid line connects the first and second expansible chambers such that there is a positive displacement of hydraulic fluid from one chamber to the other causing expansion of the second chamber when the first chamber is correspondingly contracted.

It is an object of the present invention to provide a scrap cutter which can easily be mounted to and employed with existing mechanical presses without major modifications thereto.

Another object of the present invention is to provide a scrap cutter which is linked with the power takeoff mechanism of the press by a hydraulic line, thereby facilitating lateral adjustment of the scrap cutter relative to the press and avoiding the necessity for a crosshaft extending from the power takeoff element to the blade actuating device of the cutter.

Yet another object of the present invention is to provide a scrap cutter wherein hydraulic overload protection can easily be provided merely by including a relief valve within the hydraulic circuit.

These and other objects of the present invention will become apparent from the detailed description of a preferred embodiment thereof taken together with the appropriate drawing figures.

Figure 1 is a side elevational view of the scrap cutter of the present invention installed on a mechanical press;

Figure 2 is a front elevational view of the cam mechanism and hydraulic cylinder mounted to the crown of the press;

Figure 3 is a side elevational view of the scrap cutter;

Figure 4 is a front elevational view thereof;

Figure 5 is an enlarged sectional view taken along line 5-5 of Figure 3 and viewed in the direction of the arrows;

Figure 6 is an enlarged sectional view of an alternative cam mounting arrangement; and

Figure 7 is a hydraulic schematic of the scrap cutter.

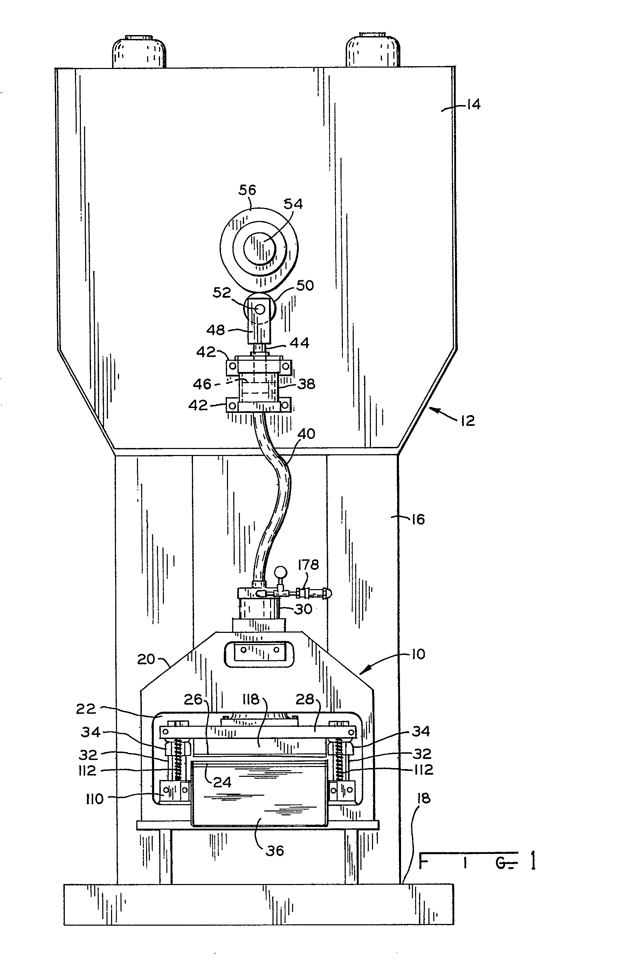

Referring now in detail to the drawings, and in particular to Figure 1, the scrap cutter 10 is shown installed on a mechanical press 12 of the type manufactured by The Minster Machine Company of Minster, Ohio. Press 12 comprises a crown 14 connected to uprights 16, which are in turn supported on bed 18. Scrap cutter 10 may either be freestanding or mounted to the bed 18 or uprights 16 of press 12 by means of a suitable bracket.

Scrap cutter 10 comprises a housing 20 having a large opening 22 in which are mounted stationary blade 24 and movable blade 26, the latter being connected to an upper blade plate 28. Upper blade plate 28 is reciprocated vertically by hydraulic cylinder 30 and is guided on guide posts 32 by standard die guide bushings 34. A discharge chute 36 conveys the severed links of the scrap to a suitable receiving bin (not shown).

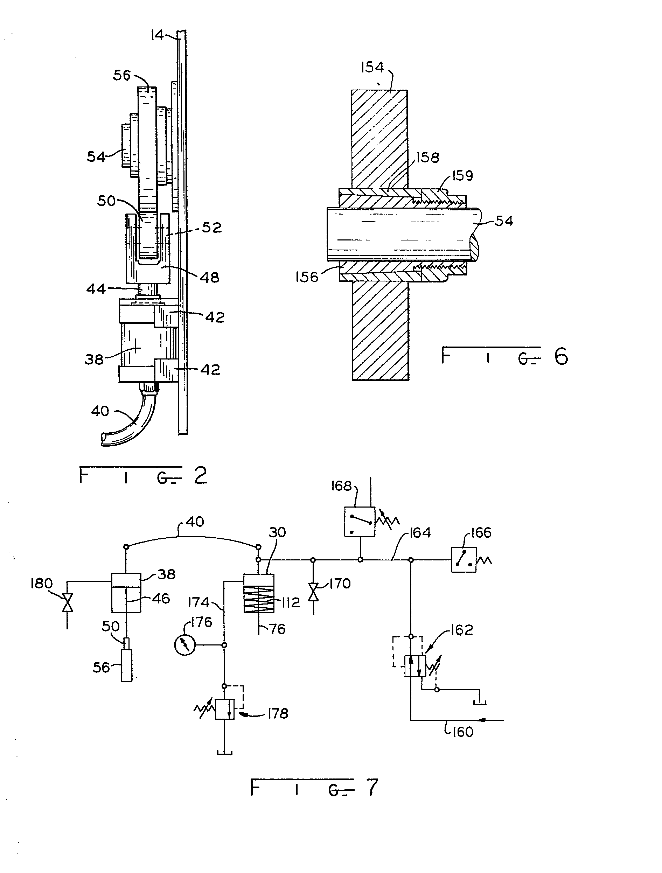

Hydraulic cylinder 30 is connected to a second hydraulic cylinder 38 by means of a flexible hydraulic hose 40. Hydraulic cylinder 38, which is very similar in structure to hydraulic cylinder 30, is mounted to the crown 14 of press 12 by brackets 42. Hydraulic cylinder 38 comprises a piston 46 having a connecting rod 44 connected thereto and extending upwardly out of the cylinder 38. With additional reference to Figure 2, connecting rod 44 is connected to a yoke 48 and a circular cam follower 50 is pivotally connected to yoke 48 by a shaft 52. An extension 54 of the press crankshaft (not shown) is keyed to a cam 56 so that cam 56 rotates in unison with the press crankshaft and depresses cam follower 50 on each cycle of the press. Each time that cam 56 rotates, piston 46 is depressed within cylinder 38 thereby pressurizing the hydraulic fluid therein, and since the hydraulic system is bled completely free of air, there is a positive displacement and pressurizing of hydraulic fluid in line 40 and in hydraulic cylinder 30 so that the piston therein moves a distance corresponding to the volume of fluid displaced. If it is desired to have cam 56 rotate once for each two cycles of press 12, it could be driven off crankshaft extension 54 by a chain or gear arrangement having a two-to-one ratio. Obviously, other ratios could be selected depending on the timing which is desired.

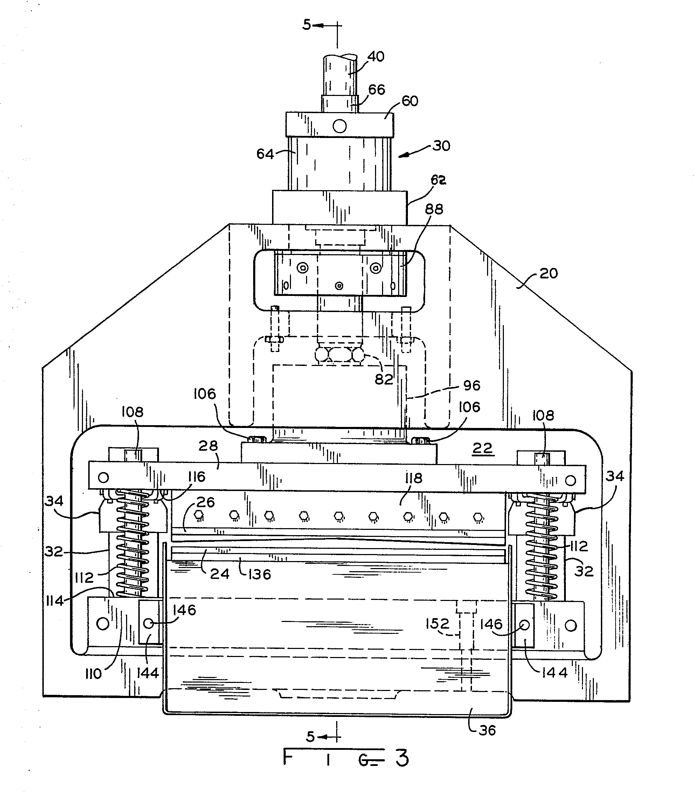

With reference now to Figures 3, 4 and 5, the details of the remainder of scrap cutter 10 will be described. Hydraulic cylinder 30 is mounted to housing 20 and comprises an upper plate 60, a lower plate 62, and a cylindrical sidewall member 64 and hydraulic hose 40 is connected to top plate 60 by hydraulic fitting 66. A piston 68 is slidably received within cylinder 30 and sealed against sidewall member 64 by seals 70 and 72 held in place by retainers 74. Piston connecting rod 76 is rigidly connected to piston 68, extends through lower plate 62 and is sealed thereagainst by seal 78. Piston connecting rod 76 extends through the upper portion 80 of housing 20 and is threadedly connected within the socket 81 of ball screw connection 82. Connecting rod 76 extends through rod wiper 84 and through an opening 86 within housing 20. Adjusting nut 88 is threadedly connected to ball screw connection 82 and is for the purpose of adjusting the shutheight of blade 26. When nut 88 has been adjusted to the proper position, it is locked against ball screw connection 82 by set screws 90. A dampening washer 92 positioned between nut 88 and the upper portion 80 of housing 20 serves to cushion nut 88 against housing 20 on blade opening.

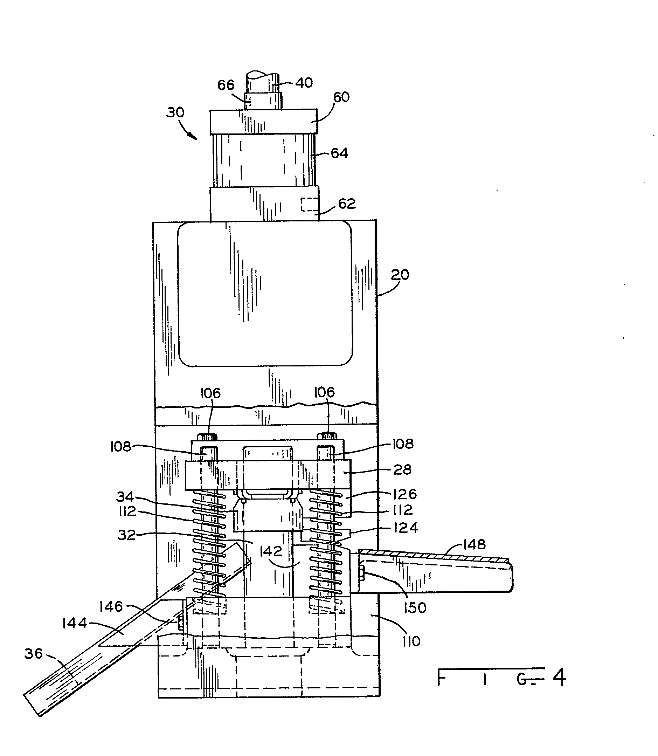

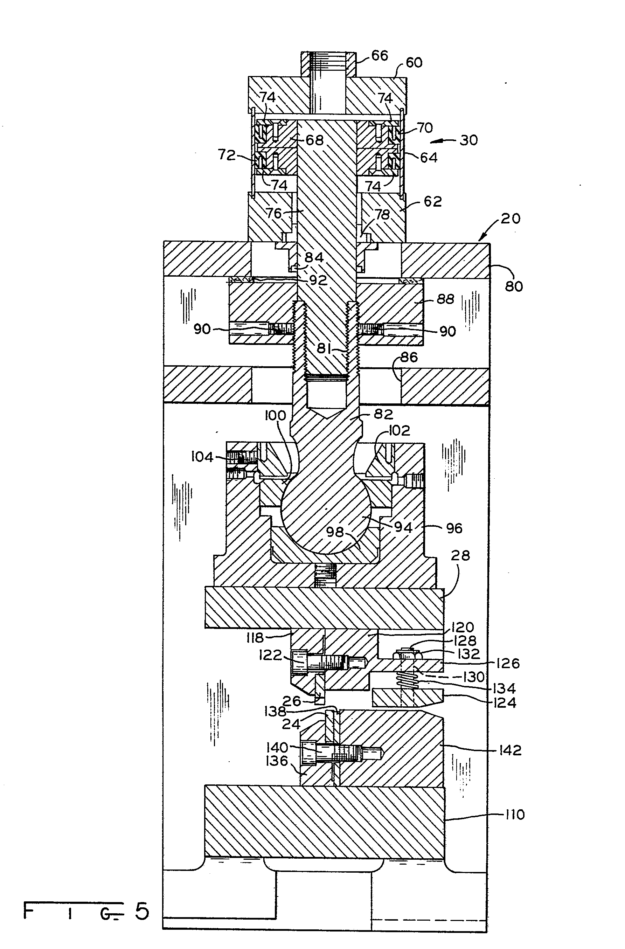

The ball 94 of connection screw 82 extends downwardly into housing 96 against bushing 98 and is retained therein by bushing 100 and ball adjusting nut 102, the latter being locked against movement by set screw 104. Housing 96 is connected to the upper blade plate 28 by screws 106 (Figure 3), and plate 28 is guided on guide posts 32 by means of conventional guide bushings 34, which are commercially available. Four vertical spring retainer posts 108 are rigidly connected to the lower blade plate 110 and each have springs 112 coiled therearound and interposed between the upper surface 114 of lower plate 110 and the lower surface 116 of upper plate 28. Springs 112 urge upper plate 28 upwardly so that, when cylinder 30 is no longer pressurized, upper plate 28 will be lifted until adjusting nut 88 (Figure 5) abuts the upper portion 80 of housing 20. Plate 28 is slidable over spring retainer posts 108 and guided on guide posts 32, the latter through the very close tolerance guiding of bushings 34.

Upper blade 26 is clamped between upper blade holders 118 and 120 by screws 122. Blade holder 120 is rigidly connected to plate 28 by a plurality of cap head screws (not shown), and a hold down plate 124 is connected to portion 126 thereof by threaded stud 128 (Figure 5). Stud 128 is threaded to hold down plate 124, is slidably received within a clearance opening 130 in portion 126 and retained thereon by nut 132. A spring 134 is disposed around stud 128 and acts against hold down plate 124 and portion 126 to urge plate 124 to the fully extended position shown in Figure 5.

Lower blade 24 is clamped between blade holder 136 and spacer 138 by screws 140, which is threadedly secured to lower blade holder 142. Lower blade holder 142 is rigidly connected to lower blade plate 110 by a plurality of screws (not shown).

As shown in Figures 3 and 4, a discharge chute 36 is connected to lower blade plate 110 by brackets 144 and screws 146, and provides a discharge path for the lengths of scrap sheared by blades 24 and 26. An infeed support table 148 is connected by screws 150 to blade holder 142, and serves to support and guide the skeleton as it is fed into scrap cutter 10. Lower plate 110 is rigidly secured to housing 20 by a plurality of screws 152.

Referring now to Figure 6, an alternative arrangement for adjustably mounting a cam 154 on the crankshaft extension 54 is illustrated. In the case of the embodiment shown in Figure 2, cam 56 is directly keyed to shaft 54, and any adjustment can be made only by changing the angular position of the keying. In the embodiment of Figure 6, on the other hand, cam 154 is frictionally clamped to crankshaft extension 54 by inner wedge element 156 and outer wedge element 158, which are concentrically disposed relative to cam 154 and shaft 54. Lock nut 159 is threaded to inner wedge element 156 and wedges outer element 158 against cam 154 and inner element 156, thereby frictionally clamping the entire assembly to shaft 54. If it is desired to change the angular orientation of cam 154, lock nut 159 is loosened, cam 154 is turned to the desired position, and lock nut 159 is again tightened. If desired, graduations could be provided on shaft 54 and cam 154 to facilitate adjustment.

Figure 7 illustrates the hydraulic schematic for the scrap cutter. Hydraulic supply line 160 is connected through pressure reducing valve 162 to line 164 and from there to hydraulic cylinder 30. High pressure switch 166 is connected to line 164 and is set at 1000 p.s.i. and will deactivate the press when the pressure exceeds that level. Similarly, low pressure switch 168, which is set at 25 p.s.i., is connected to line 164 and will prevent actuation of the press unless there is at least a minimum hydraulic pressure in the system. Valve 170 is a bleed valve connected to line 164 for the purpose of bleeding air from the system.

Hydraulic cylinder 30 is connected through hydraulic hose 40 to the hydraulic cylinder 38 mounted to the crown 14 of press 12. As described earlier, the piston 46 in cylinder 38 is actuated by rotating cam 56 and cam follower 50. Hydraulic cylinder 30 is connected by line 174 to an indicator gauge 176 and to a pressure relief valve 178 (Figure 1). Pressure relief valve 178 is set at 1000 p.s.i. so that if an overload condition should result from a jamming of scrap between blades 24 and 26 or an attempt to cut scrap which is too thick, the rapid increase in pressure within cylinder 30 will activate valve 178 thereby immediately dumping the high pressure fluid. Valve 180 is a bleed valve connected to hydraulic cylinder 38 for the purpose of bleeding air therefrom.

In operation, scrap is intermittently fed from press 12 over table 148, under hold down plate 124 and between blades 24 and 26. As the press crankshaft 54 rotates, cam 56 repeatedly depresses cam follower 50 and the piston 46 within hydraulic cylinder 38. This pressurizes and displaces a certain quantity of hydraulic fluid through hose 40 into hydraulic cylinder 30 thereby depressing piston 68 (Figure 5) by a distance corresponding to the amount of fluid displaced. Piston rod 76, screw connection 82 and housing 96 in turn depress the upper blade assembly against the action of springs 112 thereby causing blades 24 and 26 to come together and shear a length of scrap, which falls down chute 36 into a receiving bin. As the upper blade 26 is depressed, hold down plate 124 clamps the stock between it and lower blade holder 142 and compresses spring 134. This ensures that the scrap will be held against movement as it is being sheared so that no movement of the stock within press 12 will occur, which might otherwise cause improper blanking and forming of the part.

As cam 56 continues to rotate, follower 50 will be permitted to rise, carrying with it piston 46. This reduces the pressure on the upper side of piston 68 within cylinder 30 and permits springs 112 to raise the upper blade assembly thereby permitting another length of scrap to be fed between blades 24 and 26. This raises piston 68 to its upper position shown in Figure 5 and readies it for the next pressurization of hydraulic fluid transmitted to it from cylinder 38 when the lobe of cam 56 again depresses follower 50.

While this invention has been described as having a preferred design, it will be understood that it is capable of further modification. This application is, therefore, intended to cover any variations, uses, or adaptations of the invention following the general principles thereof and including such departures from the present disclosure as come within known or customary practice in the art to which this invention pertains and fall within the limits of the appended claims.

CLAIMS

1. A scrap cutter for use with a press having
an element that moves in synchronism with the cycling
of the press, said scrap cutter comprising:

a fluid pressure generating device having
a first expansible chamber and an operator means for
expanding and contracting said chamber when moved in
certain directions, said operator means adapted to
be mounted to a press such that it is moved in said
certain directions by the element of the press that
moves in synchronism with the cycling of the press,

a pair of blade elements adapted to cut scrap
material when closed wherein at least one of the blade
elements is movable relative to the other blade element,

a fluid pressure actuating device having
a second expansible chamber and a connecting arm means
connected between said second expansible chamber and
said movable blade element, said connecting arm means
being connected such that it closes the movable blade
element when the second expansible chamber is expanded
and opens the movable blade element when the second
expansible chamber is contracted, and

fluid line means connecting said first and
second expansible chambers such that there is a positive
displacement of fluid from one chamber to the other
causing expansion of the other chamber when said one
chamber is correspondingly contracted.

2. The scrap cutter of Claim 1 wherein said first
and second expansible chambers comprise first and second
hydraulic cylinders having pistons slidably received
therein, the piston of said first expansible chamber
is connected to said operator means and a piston of
said second expansible chamber is connected to said
connecting arm means.

3. A scrap cutter for use with a press having
a power takeoff element that moves in synchronism with the cylcing of the press, said scrap cutter comprising:

a first cylinder having a first piston slidably received therein,

first linkage means for connecting one of said piston and cylinder to a power takeoff element of a press so that the movement of the power takeoff element is transmitted to said one of said piston and cylinder,

a pair of blade elements adapted to be positioned at the outfeed side of a press and adapted to cut scrap material fed out of the press when the blade elements are closed, at least one of the blade elements being movable relative to the other blade element,

a second fluid cylinder having a second piston slidably received therein,

second linkage means for connecting one of said second cylinder and second piston to said movable blade element so that the movement of said one of said second cylinder and piston is transmitted to said movable blade element, and

a fluid conduit means directly connecting said first and second cylinders such that there is a positive displacement of fluid from said first cylinder to said second cylinder when said one of said first piston and cylinder is moved by said first linkage means in a direction to contract the effective internal volume of said first cylinder.

4.    The scrap cutter of Claim 3 wherein said first and second linkage means are connected to said first and second pistons, respectively.

5.    The scrap cutter of Claims 3 or 4 wherein said first cylinder is mounted to a mechanical press having a rotating power takeoff element and said first linkage means is connected to said takeoff element.

6.    The scrap cutter of Claim 3 wherein said first cylinder is mounted to a mechanical press having a rotating power takeoff element and said first linkage means is connected to said power takeoff element and said first linkage means connects the rotational movement of said power takeoff element to reciprocating movement and transmits this reciprocating movement to said one of said first cylinder and piston.

7. The scrap cutter of Claim 6 wherein said power takeoff element comprises a cam and said first linkage means comprises a cam follower in engagement with said cam.

8. The scrap cutter of Claims 5 or 6 wherein said cylinders are hydraulic cylinders and said fluid conduit means is a flexible hydraulic hose thereby enabling the scrap cutter to be moved relative to the press.

9. The scrap cutter of any of Claims 3 to 8 including a valve means connected to one of said first and second cylinders for preventing the fluid pressure therein from exceeding a given level.

10. The scrap cutter of Claim 6 wherein said power takeoff element comprises an eccentric member that is angularly adjustable relative to the axis of rotation thereof.

11. The scrap cutter of Claim 6 wherein said power takeoff element comprises a shaft and a cam mounted on said shaft, said first linkage means comprises a cam follower in engagement with said cam, and including means for angularly adjusting said cam on said shaft.

F I G 1

2/5

0058793

FIG 2

FIG 6

FIG 7

F I G 3

F I G. 4

FIG 5